# FASCICULE DE BREVET EUROPEEN

(11) **EP 2 358 559 B1**
(45) Date de publication et mention de la délivrance du brevet: **31.08.2016**
(21) Numéro de dépôt: 09803864.9
(22) Date de dépôt: 15.12.2009
(51) Int. Cl.: B60N 2/06, B60R 16/02, B62D 25/20

(54) **VEHICULE A PLANCHER POURVU D'UNE RETENUE DE CONNECTEUR DE PLANCHER**
FAHRZEUG MIT BODEN MIT EINEM BODENVERBINDERSTIFT
VEHICLE WITH A FLOOR PROVIDED WITH A FLOOR CONNECTOR PEG

(30) Priorité: 16.12.2008 FR 0858639
(43) Date de publication de la demande: 24.08.2011
(73) Titulaire: Renault S.A.S., 78288 Guyancourt Cedex (FR)
(72) Inventeur: LAURIE, John, F-78000 Versailles (FR)
(86) Numéro de dépôt international: PCT/FR2009/052533
(87) Numéro de publication internationale: WO 2010/076479

(56) Documents cités:
- JP-A- 2004 210 112
- US-A- 5 988 748
- US-A- 6 011 318
- US-A1- 2005 035 622

## Description

L'invention se rapporte à la réalisation d'une partie du plancher d'un véhicule automobile et à un véhicule ainsi équipé.

Précisément, il s'agit d'une partie de plancher apte à s'étendre sous l'un au moins des sièges de l'habitacle, favorablement sous les sièges de rang 1 (rang avant). D'autre part, l'invention concerne aussi un procédé de montage d'un siège avant.

Il est connu que la connexion électrique et/ou de données (réglages divers), sous siège, en particulier de rang 1, relie le câblage du siège avec le câblage plancher du véhicule. Elle comprend typiquement un connecteur fixé sur un élément rigide et un câble souple (souvent dénommé « boucle dynamique de câblage ») qui permet au siège de débattre dans un plan XZ du véhicule, suivant les mouvements des glissières et de la rehausse. Le connecteur de plancher (situé au bout de son câble flexible) appartient donc au câblage électrique courant dans le plancher et est propre à être connecté au connecteur de siège du câblage électrique du siège.

Du document US2005/0035622, on connaît une partie du plancher de véhicule, qui montre les caractéristiques du préambule de la revendication 1. D'autre part, le document US2005/0035622 montre un procédé de montage avec les caractéristiques du préambule de la revendication 10.

L'invention vise à satisfaire notamment les exigences suivantes :
- le câble souple et son connecteur de câblage plancher doivent être maintenus dans une position connue pour éviter d'être accroché ou écrasé par le siège, en particulier lors du montage initial du siège, en usine (risque de détérioration du câblage + problèmes de fiabilité),
- une fois le siège monté, l'opérateur doit pouvoir facilement retrouver le connecteur et le passer au dessus de la barre transversale avant dont un siège est typiquement pourvu, sous son assise, à l'avant, ceci permettant à cet opérateur d'effectuer la connexion avec le câblage siège,
- un pré-maintien du connecteur du câblage plancher doit être assuré pendant le montage du siège et la solution de l'invention doit favorablement être compatible avec des sièges à commande manuelle ou électrique.

Pour satisfaire à tout ou partie de ces exigences, il est proposé que le (la partie de) plancher précité(e) comprenne un moyen de fixation se présentant extérieurement comme une empreinte en creux adapté pour recevoir de façon démontable le connecteur de plancher situé au bout d'un câble flexible appartenant au câblage électrique courant dans le plancher et propre à être connecté au connecteur de siège du câblage électrique du siège.

De préférence, dans l'environnement du moyen de fixation, cette partie de plancher présentera une forme bombée vers le sommet de laquelle sera intégré le moyen de fixation.

Considérant l'ensemble comprenant une telle partie de plancher et le connecteur de plancher, on conseille que l'empreinte en creux présente des nervures adaptées à coopérer, de façon démontable, uniquement avec une partie latérale du connecteur de plancher.

On conseille en outre même que l'empreinte présente des faces supérieure et frontale (ou dorsale) ouvertes pour favoriser un accès au connecteur de plancher par-dessus et devant (ou derrière), lorsque celui-ci est reçu dans l'empreinte et est alors dirigé vers l'avant avec, à l'arrière, sa liaison avec le câble flexible.

On conseille en outre que l'empreinte formée en creux soit délimitée par des parois dépourvues d'ouverture, donc pleines. Ainsi on évitera de dégrader l'isolation acoustique de l'habitacle du véhicule. D'autre part, il est proposé un procédé avec les caractéristiques de la revendication 10.

D'autres caractéristiques et avantages de l'invention ressortiront encore de la description faite ci-après, en référence à des exemples non limitatifs de réalisation et aux dessins annexés où :
- les figures 1, 2 montrent le dessous d'un siège d'automobile, version non électrique, en liaison avec les figures 3, 4, 5, 6 qui sont des détails agrandis,
- les figures 7, 8 montrent le dessous d'un siège d'automobile, version siège électrique, en liaison avec les figures 9, 10 qui sont à nouveau des détails agrandis.

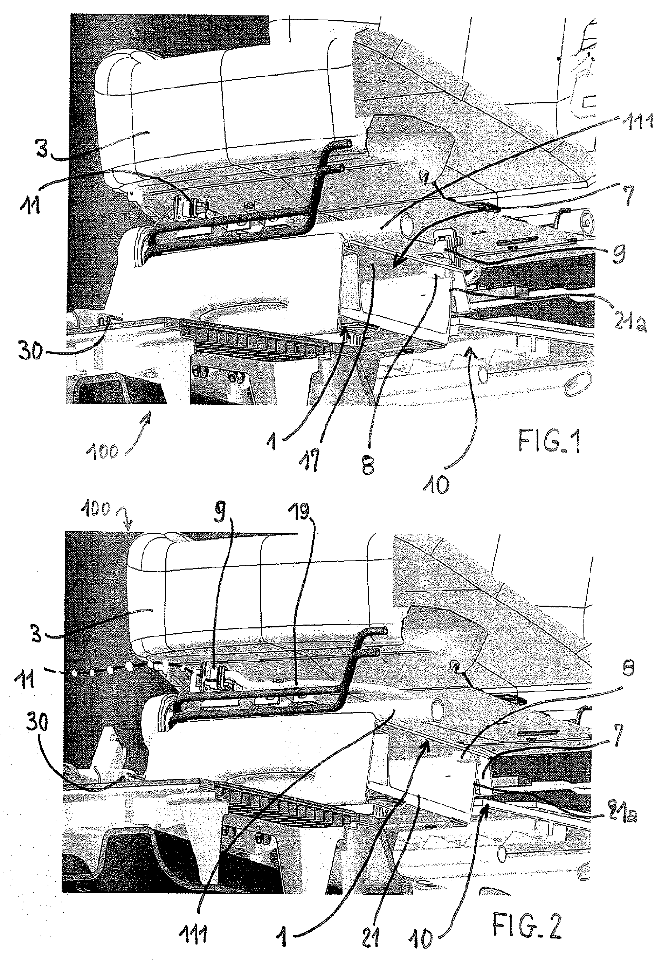

Figures 1 et 2, on voit une partie 1 du plancher 10 d'un véhicule automobile 100.

Cette partie 1 s'étend sous un siège 3 de l'habitacle 5 du véhicule.

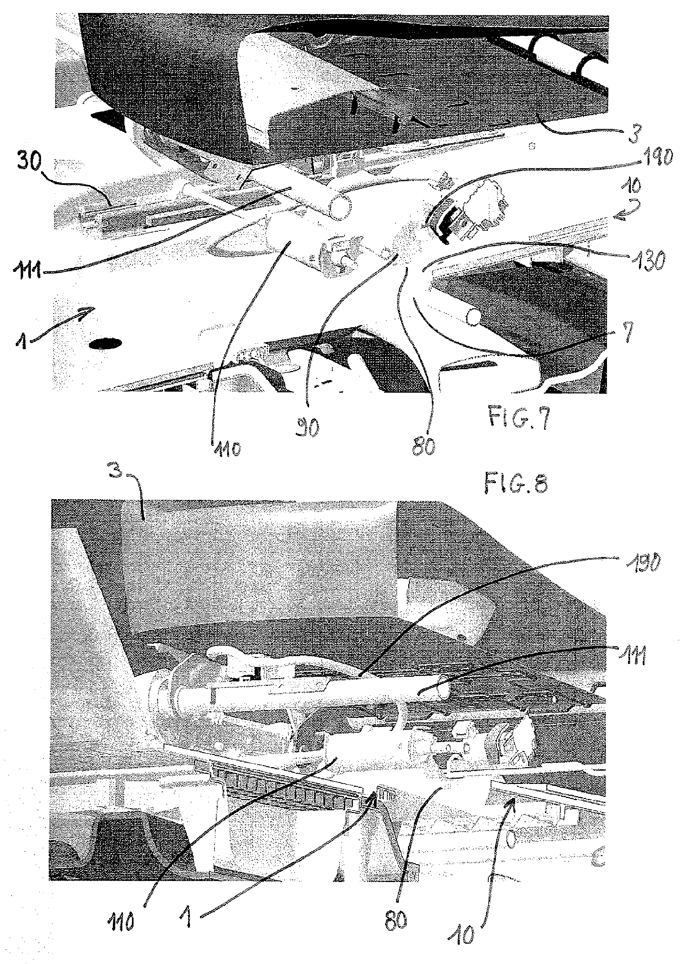

Le siège 3 coulisse d'avant en arrière et inversement dans des glissières de plancher 30 que l'on voit mieux fig.7.

La partie 1 présente un corps en matériau synthétique rigide, préformé, 7 ; typiquement un plastique dur.

Elle comprend également un moyen 8 de fixation intégré (c'est-à-dire monobloc) avec le corps 7.

Ce moyen 8 de fixation est adapté pour recevoir de façon démontable le connecteur de plancher 9 situé au bout de son câble flexible 19.

Comme habituellement prévu, ce connecteur et son câble appartiennent au câblage électrique courant dans (en particulier sous) le plancher 10.

Le connecteur 9 est propre à être connecté au connecteur de siège 11 du câblage électrique (en soi connu) du siège.

Un tel moyen 8 de fixation permet donc principalement de pré positionner le connecteur 9 sur le corps 7 et le maintenir dans une position lui évitant d'être accroché ou écrasé par le siège, en particulier lors du montage initial du siège. De même, une fois le siège monté, l'opérateur peut facilement retrouver le connecteur et le passer au dessus de la barre transversale avant dont un siège est typiquement pourvu, sous son assise, à l'avant, ceci permettant à cet opérateur d'effectuer la connexion avec le câblage siège.

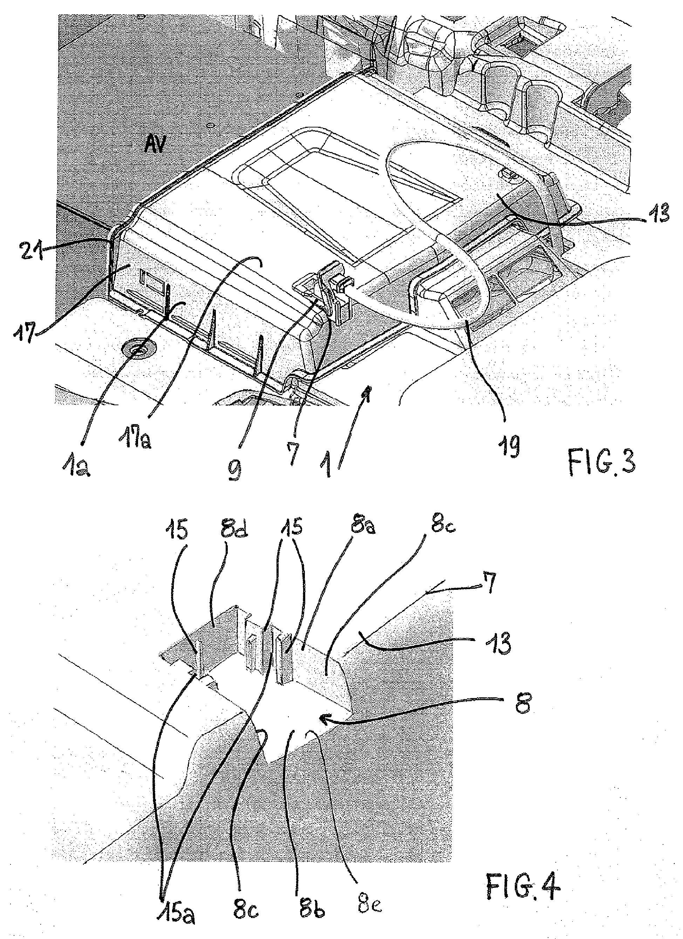

Figures 3 et 4 en particulier, on constate que, dans l'environnement du moyen de fixation 8, la partie de plancher 1 présente une forme bombée 13 à l'endroit de laquelle (ici vers le sommet de laquelle) est intégré le moyen de fixation 8.

On conseille que, comme illustré, ce moyen de fixation 8 se présente extérieurement comme une empreinte en creux.

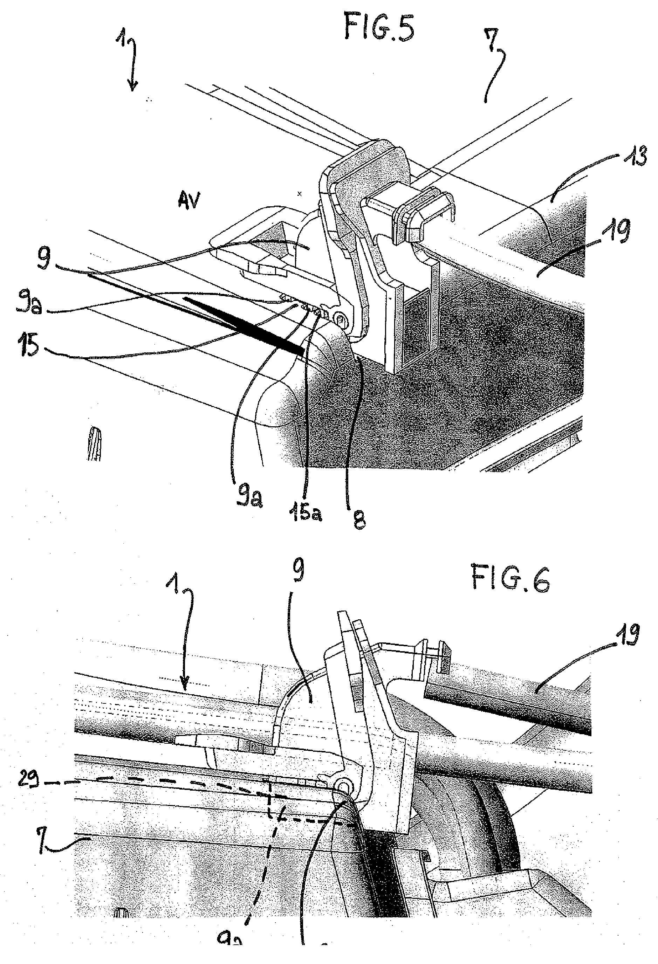

On remarque que, de préférence, cette empreinte creuse 8 présentera des nervures 15 adaptées à coopérer, de façon démontable, avec uniquement une partie latérale 9a du connecteur de plancher 9, favorisant ainsi son accessibilité, la maniabilité et sa préhension (voir fig.6 et fig.7).

Comme illustré, on conseille que l'empreinte 8 soit totalement ouverte sur le dessus, en 8a, et dorsalement, en 8b, pour favoriser un accès au connecteur de plancher 9 par-dessus et depuis l'arrière, lorsque celui-ci est reçu dans l'empreinte et est alors dirigé vers l'avant (AV) avec, à l'arrière, sa liaison avec le câble flexible 19.

Pour favoriser la rigidité de la zone, limiter son encrassement, voire les incertitudes de positionnement du connecteur (positionnement possible plus ou moins à l'aveugle au moins en partie), on conseille que la forme en creux 8 présente des parois continues ou pleines, donc sans ouverture, ici les parois latérales 8c qui comprennent la paroi frontale (ou avant) dressée 8d et la paroi de fond 8e.

Pour éviter de dégrader l'isolation acoustique de l'habitacle du véhicule, l'empreinte est, de préférence, fermée. Spécifiquement dans le cas illustré où le siège 3 figuré est l'un des sièges avant du véhicule (siège conducteur ou passager avant), avec donc les contraintes qui lui sont liées en termes d'espace, d'accessibilité, de mouvement (coulissement, réglage en hauteur, etc.), les nervures 15 (ici latérales) définiront favorablement entre elles des glissières dressées 15a, propres à recevoir de façon libérable une partie inférieure avant 29 du connecteur de plancher 9, ici juste limitée à son coin inférieur avant (zone 9a précitée).

Egalement particulièrement dans ce cas, on conseille:
- que la forme bombée 13 du plancher 1 concerné définisse un bac 17 à la face supérieure de la paroi de dessus 17a duquel est intégrée l'empreinte 8, vers l'arrière,
- et que ce bac soit ouvert frontalement (donc à l'avant) pour que s'y engage de façon coulissante un tiroir 21 dont les parois latérales 21a s'élèvent jusqu'à un niveau inférieur au niveau le plus bas de l'empreinte en creux (voir fig.2).

Pour limiter l'encombrement et l'interférence avec l'environnement, notamment le coulissement du tiroir 21, on voit notamment figures 3, 4 que l'empreinte 8 est formée à l'endroit du changement de pente entre la paroi de dessus 17a du bac 17 et la paroi arrière 17b, près de la paroi latérale extérieure 1a du plancher la plus accessible.

A partir des figures 1, 2, on aura certainement noté que la configuration qui précède concerne a priori un environnement de siège avant « manuel », sans réglage électrique de position ni chauffage électrique, mémoire de réglage personnalisé, etc.

A partir de la figure 7, et donc figures 7-10, est présentée une solution privilégiée pour un siège avant à commandes électriques : réglage électrique de position et/ou chauffage électrique et/ou réglage(s) personnalisé(s).

On retrouve bien sûr une partie de plancher, toujours référencée 1, présentant un corps en matériau synthétique rigide, préformé, 7. Un moyen de fixation 80, se présentant extérieurement toujours comme une empreinte en creux, y est présente pour recevoir de façon démontable le connecteur de plancher 90 situé au bout de son câble flexible 190.

Un tel moyen 80 de fixation, comme précédemment pour le moyen 8 de fixation, permet donc de pré positionner le connecteur de plancher 90 et le maintenir dans une position lui évitant d'être accroché ou écrasé par le siège, en particulier lors du montage initial du siège.

Figure 7, on voit la position de pré-maintien du connecteur 90 et de son câble. Devant lui, on note le moteur électrique 110 de glissières et transmissions pour le réglage du siège, qui s'étend transversalement sous le siège 3, et la barre avant 111 de siège (comme d'ailleurs figures 1, 2).

Figure 8, on voit la position après connexion au câblage de siège.

Une fois le siège monté, l'opérateur peut ainsi facilement retrouver le connecteur et le passer au dessus de la barre transversale avant 111, sous son assise, à l'avant, ceci permettant à cet opérateur d'effectuer la connexion avec le câblage siège.

Des nervures 15 coopèrent, de façon démontable, avec une partie latérale du connecteur 90 et définissent des glissières dressées 15a. Ici, ces glissières reçoivent, avec retenue libérable à la main, la partie inférieure arrière 90a du connecteur de plancher.

Comme précédemment, l'empreinte 80 est totalement ouverte sur le dessus et frontalement, avec ces parois pleines, sans ouverture, à l'endroit de ses trois autres côtés formées par les parois latérales dressées 80a, y compris la paroi dorsale 80b et la paroi de fond 80e. La matière permettant d'obtenir cette forme d'empreinte fermée sera adaptée en conséquence.

L'empreinte 80 est ici une pièce plastique moulée, rapportée dans une ouverture formée dans le corps 7 (qui est ici un faux plancher) et située vers le sommet de la forme bombée 130 que ce corps présente sous l'arrière du siège (position qu'on notait d'ailleurs déjà pour la forme 13).

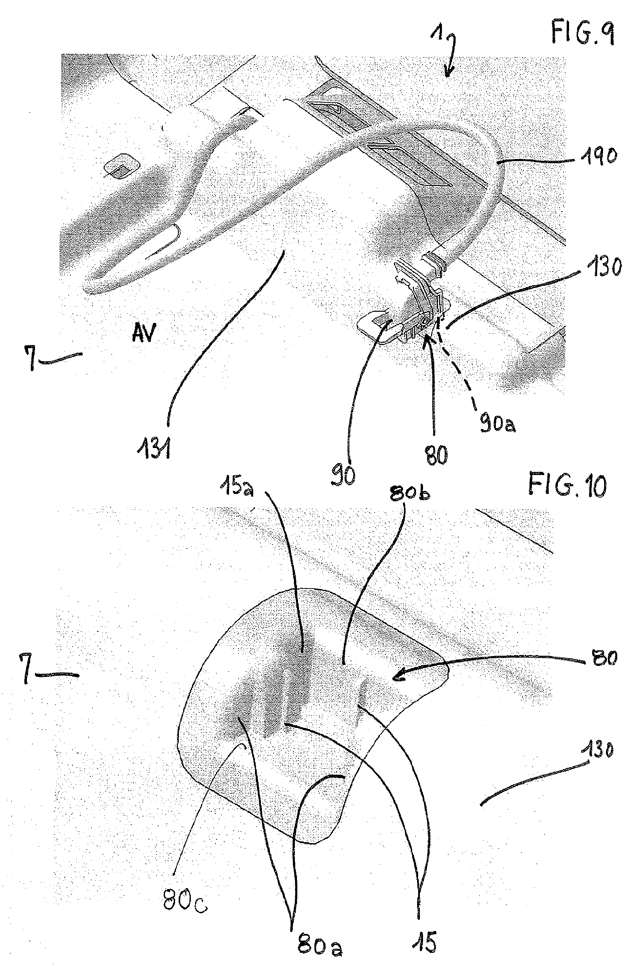

Ainsi, comme on voit figures 7, 9, on va favoriser un accès par-dessus et par devant à l'empreinte et au connecteur de plancher 90, lorsque celui-ci y est reçu, étant alors dirigé vers l'avant avec, à l'arrière, sa liaison avec le câble 190.

Egalement comme précédemment, l'empreinte est ici formée à l'endroit d'un changement de pente, à l'endroit d'une élévation arrière 131, près du bord latéral extérieur le plus accessible.

En conclusion, une partie importante de l'invention consiste à créer, sur une pièce plastique du plancher sous siège, une empreinte négative de la forme d'un coin du connecteur de plancher, avec favorablement des nervures pour créer une retenue démontable. Les nervures seront de préférence ajustées dans le moule de la pièce plastique pour créer un effort de blocage qui tient bien le connecteur pendant le montage du siège, tout en permettant à l'opérateur de retirer le connecteur facilement de l'empreinte, lorsque la connexion siège est à effectuer.

L'empreinte sera donc favorablement fermée pour éviter de créer un trou de passage acoustique et placée dans un endroit :
- suffisamment loin des glissières de siège pour éviter l'agression connecteur et câble lors du montage, où le connecteur est accessible pour l'opérateur qui doit sortir le connecteur de son empreinte, le passer sous le siège et effectuer la connexion avec le câblage siège,
- qui est peu visible pour un passager assis aux places rang 2 (prestation qualité perçue).

Ainsi, le procédé de montage du siège avant 3 auquel se rapporte une partie de l'invention pourra être défini comme suit :
- le siège étant équipé d'un câblage électrique pourvu d'un connecteur de siège 11, on place, dans l'habitacle du véhicule, ce siège sur ladite partie 1 du plancher, dans les glissières 30 qui ont été préalablement fixées à ce plancher à l'intérieur duquel court d'ailleurs déjà :
   * le câblage électrique porteur du connecteur de plancher (9,90) situé au bout de son câble flexible (19,190),
   * et le moyen de fixation 8 ou 80 qui convient,
- peu de temps avant cette mise en place, on introduit la partie appropriée du connecteur de plancher 9 ou 90 dans le moyen de fixation 8, 80 en question,
- on l' y maintient (bien sûr de façon démontable) pendant le montage du siège 3 (le moyen de fixation 8, 80 étant alors situé sous ce siège),
- et, une fois le siège monté, on déplace le connecteur de plancher 9, 90 hors de son moyen de fixation temporaire 8, 80, pour le connecter au connecteur de siège 11.

On peut imaginer l'utilisation de ce principe de pré-maintien pour toute opération où l'accès à un connecteur électrique est difficile quand une autre pièce est montée par-dessus et où la connexion électrique ne peut pas être effectuée avant le montage de cette pièce. Le blocage du connecteur peut se faire par contrainte sur toute forme à l'intérieur ou l'extérieur du connecteur qui ne risque pas de dégrader son fonctionnement.

## Revendications

1. Partie du plancher de véhicule automobile apte à s'étendre sous l'un au moins des sièges (3) de l'habitacle du véhicule, **caractérisée en ce que** cette partie de plancher comprend un moyen de fixation (8, 80) se présentant extérieurement comme une empreinte en creux et adapté pour recevoir de façon démontable le connecteur de plancher (9, 90) situé au bout d'un câble flexible appartenant au câblage électrique courant dans le plancher et propre à être connecté au connecteur de siège du câblage électrique du siège.

2. Partie de plancher selon la revendication 1, **caractérisée en ce que**, dans l'environnement du moyen de fixation, cette partie présente une forme bombée (13, 130) vers le sommet de laquelle est disposé le moyen de fixation (8, 80).

3. Ensemble comprenant la partie (7) de plancher selon la revendication 1 ou 2 et le connecteur de plancher (9, 90) situé au bout dudit câble flexible du câblage électrique de ce plancher.

4. Ensemble selon la revendication 3, **caractérisé en ce que** l'empreinte en creux présente des nervures (15) adaptées à coopérer, de façon démontable, uniquement avec une partie latérale, avant ou arrière, du connecteur de plancher.

5. Ensemble selon la revendication 4, **caractérisé en ce que** l'empreinte est totalement ouverte sur le dessus et frontalement ou dorsalement, pour favoriser un accès par-dessus et par devant ou derrière à l'empreinte (8, 80) et au connecteur de plancher (9, 90), lorsque celui-ci est reçu dans l'empreinte et est alors dirigé vers l'avant avec, à l'arrière, sa liaison avec le câble flexible (19, 190).

6. Ensemble selon la revendication 4 ou 5, **caractérisé en ce que** la forme en creux est délimitée par des parois (8b, 80b, etc.) dépourvues d'ouverture, donc pleines.

7. Véhicule automobile comprenant un habitacle où des sièges avant surplombent ledit ensemble selon l'une des revendications 3 à 6, **caractérisé en ce que** ladite partie de plancher (1) s'étend sous l'un au moins des sièges avant (3) de l'habitacle du véhicule et les nervures définissent des glissières dressées (15a), propres à recevoir de façon libérable la partie inférieure avant ou arrière du connecteur de plancher.

8. Véhicule selon la revendication 7, **caractérisé en ce que** :
- la forme bombée définit un bac (17) à la face supérieure de la paroi de dessus duquel est intégrée l'empreinte en creux, vers l'arrière,
- et ce bac est ouvert frontalement à l'avant pour que s'y engage de façon coulissante un tiroir (21) dont les parois latérales s'élèvent jusqu'à un niveau inférieur au niveau le plus bas de ladite empreinte en creux.

9. Véhicule selon la revendication 8, **caractérisé en ce que** l'empreinte est formée à l'endroit du changement de pente (13) entre la paroi de dessus du bac et la paroi arrière, près de la paroi latérale extérieure (1a).

10. Procédé de montage d'un siège avant (3) dans l'habitacle d'un véhicule comprenant une étape dans laquelle on place ledit siège (3) sur une partie (1) de plancher, dans des glissières (30) fixées à ce plancher (1) dans lequel court un câblage électrique comportant un connecteur de plancher (9, 90) situé au bout d'un câble flexible et qui est propre à être connecté au connecteur de siège (11) d'un câblage électrique du siège, **caractérisé en ce qu'**il comprend en outre des étapes où :
- pendant le montage du siège (3), on maintient de façon démontable le connecteur de plancher (9, 90) dans un moyen de fixation (8, 80) dont on a pourvu préalablement ladite partie (1) de plancher, ledit moyen de fixation (8, 80) étant alors situé sous le siège,
- et, une fois le siège (3) monté, on déplace ledit connecteur de plancher (9, 90) hors du moyen de fixation (8, 80) pour le connecter au connecteur de siège (11).

## Patentansprüche

1. Teil des Bodens eines Automobilfahrzeugs, welcher eingerichtet ist, sich unter mindestens einem der Sitze (3) des Fahrgastraums des Fahrzeugs zu erstrecken,
**dadurch gekennzeichnet, dass** dieser Teil des Bodens ein Befestigungsmittel (8, 80) umfasst, das sich nach außen als hohle Vertiefung darstellt und eingerichtet ist, lösbar den Bodenverbinder (9, 90) aufzunehmen, der am Ende eines flexiblen Kabels angeordnet ist, das zu einer elektrischen Stromverkabelung in dem Boden gehört und geeignet ist, mit dem Sitzverbinder der elektrischen Verkabelung des Sitzes verbunden zu werden.

2. Bodenteil nach Anspruch 1, **dadurch gekennzeichnet, dass** in der Umgebung des Befestigungsmittels dieser Teil eine gewölbte Form (13, 130) aufweist, in Richtung des Scheitels von welcher das Befestigungsmittel (8, 80) angeordnet ist.

3. Einheit, umfassend den Bodenteil (7) nach Anspruch 1 oder 2 und den Bodenverbinder (9, 90), der am Ende des flexiblen Kabels der elektrischen Verkabelung dieses Bodens angeordnet ist.

4. Einheit nach Anspruch 3, **dadurch gekennzeichnet, dass** die hohle Vertiefung Rippen (15) aufweist, die eingerichtet sind, lösbar nur mit einem seitlichen, vorderen oder hinteren Teil des Bodenverbinders zusammenzuwirken.

5. Einheit nach Anspruch 4, **dadurch gekennzeichnet, dass** die Vertiefung oben und frontal oder dorsal vollständig offen ist, um einen Zugang von oben und von vorne oder hinten zu der Vertiefung (8, 80) und zu dem Bodenverbinder (9, 90) zu unterstützen, wenn dieser in der Vertiefung aufgenommen ist und daher nach vorne gerichtet wird mit seiner hinteren Verbindung mit dem flexiblen Kabel (19, 190).

6. Einheit nach Anspruch 4 oder 5, **dadurch gekennzeichnet, dass** die hohle Form durch Wände (8b, 80b usw.) begrenzt wird, die keine Öffnung aufweisen und daher durchgehend sind.

7. Automobilfahrzeug, umfassend einen Fahrgastraum, wo die Vordersitze in die Einheit nach einem der Ansprüche 3 bis 6 hineinragen, **dadurch gekennzeichnet, dass** sich der Teil (1) des Bodens unter mindestens einem der Vordersitze (3) des Fahrgastraums des Fahrzeugs erstreckt und die Rippen eingerichtete Schienen (15a) definieren, die geeignet sind, lösbar den unteren vorderen oder hinteren Teil des Bodenverbinders aufzunehmen.

8. Fahrzeug nach Anspruch 7, **dadurch gekennzeichnet, dass**:
- die gewölbte Form einen Behälter (17) auf der oberen Fläche der oberen Wand definiert, in dem die hohle Vertiefung nach hinten integriert ist,
- und der Behälter frontal vorne offen ist, damit gleitend ein Schubfach (21) mit diesem in Eingriff gelangt, dessen Seitenwände sich bis zu einem Niveau erstrecken, das niedriger ist als das niedrigste Niveau der hohlen Vertiefung.

9. Fahrzeug nach Anspruch 8, **dadurch gekennzeichnet, dass** die Vertiefung an der Stelle der Änderung der Schräge (13) zwischen der oberen Wand des Behälters und der hinteren Wand nahe bei der äußeren Seitenwand (1a) gebildet ist.

10. Verfahren zur Montage eines Vordersitzes (3) in dem Fahrgastraum eines Fahrzeugs, welches einen Schritt umfasst, in dem der Sitz (3) auf einen Teil (1) des Bodens in Schienen (30) platziert wird, die an diesem Boden (1) befestigt werden, in dem eine elektrische Verkabelung verläuft, die einen Bodenverbinder (9, 90) umfasst, der am Ende eines flexiblen Kabels angeordnet ist und der geeignet ist, mit dem Sitzverbinder (11) einer elektrischen Verkabelung des Sitzes verbunden zu werden,
**dadurch gekennzeichnet, dass** dieses außerdem die Schritte umfasst, in denen:
- während der Montage des Sitzes (3) lösbar der Bodenverbinder (9, 90) in einem Befestigungsmittel (8, 80) gehalten wird, mit dem der Teil (1) des Bodens vorher ausgestattet wurde, wobei das Befestigungsmittel (8, 80) somit unter dem Sitz angeordnet ist,
- und, sobald der Sitz (3) montiert ist, der Bodenverbinder (9, 90) aus dem Befestigungsmittel (8, 80) entnommen wird, um diesen mit dem Sitzverbinder (11) zu verbinden.

## Claims

1. Part of the floor of a motor vehicle suitable for extending under at least one of the seats (3) of the vehicle interior, **characterized in that** this part of the floor comprises a fixing means (8, 80) that is externally in the form of a hollow imprint suitable for receiving, in a detachable manner, the floor connector (9, 90) situated at the end of a flexible cable belonging to the electrical wiring running in the floor and designed to be connected to the seat connector for the electrical wiring of the seat.

2. Floor part according to Claim 1, **characterized in that**, in the environment of the fixing means, this part has a domed form (13, 130) towards the summit of which is arranged the fixing means (8, 80).

3. Assembly comprising the floor part (7) according to Claim 1 or 2 and the floor connector (9, 90) situated at the end of said flexible cable of the electrical wiring of this floor.

4. Assembly according to Claim 3, **characterized in that** the hollow imprint has ridges (15) suitable for cooperating, in a detachable manner, only with a lateral part, front or rear, of the floor connector.

5. Assembly according to Claim 4, **characterized in that** the imprint is totally open at the top and at the front or back, to favour access from above and from in front or from behind the imprint (8, 80) and the floor connector (9, 90), when the latter is received in the imprint and is then directed towards the front with, at the rear, its link with the flexible cable (19, 190).

6. Assembly according to Claim 4 or 5, **characterized in that** the hollow form is delimited by walls (8b, 80b, etc.) without any openings, therefore solid.

7. Motor vehicle comprising an interior where front seats overhang said assembly according to one of Claims 3 to 6, **characterized in that** said floor part (1) extends under at least one of the front seats (3) of the vehicle interior and the ridges define raised guideways (15a), specifically for releasably receiving the front or rear bottom part of the floor connector.

8. Vehicle according to Claim 7, **characterized in that**:
- the domed form defines a trough (17) in the top face of the top wall of which is incorporated the hollow imprint, towards the rear,
- and the trough is open frontally at the front for a drawer (21) to be slidingly engaged therein, the lateral walls of which rise to a level lower than the lowest level of said hollow imprint.

9. Vehicle according to Claim 8, **characterized in that** the imprint is formed at the point of the change of slope (13) between the top wall of the trough and the rear wall, close to the outer lateral wall (1a).

10. Method for fitting a front seat (3) in a vehicle interior comprising a step in which said seat (3) is placed on a floor part (1), in runners (30) fixed to this floor (1) in which runs electrical wiring comprising a floor connector (9, 90) situated at the end of a flexible cable and which is designed to be connected to the seat connector (11) of electrical wiring of the seat, **characterized in that** it further comprises steps in which:
- during the fitting of the seat (3), the floor connector (9, 90) is held detachably in a fixing means (8, 80) with which said floor part (1) has previously been provided, said fixing means (8, 80) then being situated under the seat,
- and, once the seat (3) is fitted, said floor connector (9, 90) is moved out of the fixing means (8, 80) to be connected to the seat connector (11).
